# FASCICULE DE BREVET EUROPEEN

(11) **EP 0 649 762 B1**
(45) Date de publication et mention de la délivrance du brevet: **07.01.1998**
(21) Numéro de dépôt: 94402347.2
(22) Date de dépôt: 19.10.1994
(51) Int. Cl.: B60C 23/00

(54) **Dispositif d'étanchéité pour passage de fluide à travers un roulement, et roulement équipé d'un tel dispositif**
Abdichtungsvorrichtung für einen Fluidumdurchgang durch ein Rollenlager, und Rollenlager mit dieser Vorrichtung
Sealing device for a fluid passage through a roller bearing, and roller bearing comprising such a device

(30) Priorité: 20.10.1993 FR 9312517
(43) Date de publication de la demande: 26.04.1995
(73) Titulaire: SKF FRANCE, F-92142 Clamart Cédex (FR)
(72) Inventeur: Caillault, Claude, F-37390 Saint Roch (FR); Bonnin, Christophe, F-37200 Tours (FR); Houdayer, Christophe, F-37000 Tours (FR); Rigaux, Christian, F-37260 Artannes sur Indre (FR); Berges, Martha, F-37000 Tours (FR); Beghini, Eric, F-37000 Tours (FR); Defossez,, Marc, F-37210 Parcay-Meslay (FR); Message, Olivier, F-37000 Tours (FR)
(74) Mandataire: Casalonga, Axel

(56) Documents cités:
- EP-A- 0 362 921
- FR-A- 653 815
- US-A- 4 733 707
- US-A- 4 932 451

## Description

La présente invention concerne un dispositif d'étanchéité pour le passage d'un fluide entre deux pièces dont l'une est animée d'un mouvement de rotation par rapport à l'autre. En particulier, l'invention s'applique à un roulement équipé d'un passage de fluide qui traverse les bagues tournante et non tournante du roulement.

On connaît par la demande de brevet européen EP-A-0 362 921 (SKF) un roulement équipé d'un dispositif d'étanchéité monté entre deux rangées de billes et entre les orifices aménagés sur la bague extérieure et les orifices aménagés sur la bague intérieure du roulement de façon à assurer le passage d'un fluide à travers le roulement Ce roulement permet d'établir la communication entre deux enceintes contenant un fluide sous pression. Le dispositif d'étanchéité assure d'une part le passage du fluide à travers le roulement et d'autre part empêche le lubrifiant du roulement tel que la graisse de pénétrer dans les zones de passage du fluide dans le roulement. Cependant, la structure d'un tel dispositif comporte de nombreux éléments qui créent un encombrement axial important, ce qui peut être incompatible avec certaines applications. En outre, la réalisation d'un tel dispositif est relativement coûteuse due au nombre d'éléments distincts à fabriquer et à assembler.

Une application courante de cette technique est destinée au contrôle et à la régulation de la pression des pneumatiques d'un véhicule, le dispositif d'étanchéité pour passage de fluide étant monté dans les roulements de roue du véhicule. Dans cette application particulière, on connaît par le brevet américain US-A-4 844 138 un dispositif de passage d'air dans un roulement comportant des joints formés par un fluide magnétique qui coopère avec des anneaux magnétiques pour assurer l'étanchéité à l'air. Un tel dispositif est trop sophistiqué pour être utilisé dans des conditions économiques compatibles avec la production en série comme dans le domaine de l'automobile.

On connaît également d'autres dispositifs de passage d'air à travers les moyeux de roues utilisant une paire de joints d'étanchéité pour assurer le passage étanche de l'air entre les parties tournante et fixe du moyeu (voir par exemple les demandes de brevets européens EP-A-0 204 085 et EP-A 0 208 540). La forme et la disposition de ces joints par paire crée un encombrement axial important incompatible avec certaines applications et augmente le coût de fabrication et de mise en place du dispositif. En outre, l'utilisation de deux joints distincts implique un système efficace d'immobilisation axiale desdits joints sous peine de voir ceux-ci se déplacer axialement sous l'effet de la pression du fluide.

La présente invention a pour objet de remédier aux inconvénients précités des techniques existantes en proposant un dispositif d'étanchéité simple, économique à réaliser et à mettre en place, et présentant un encombrement axial extrêmement réduit pour permettre son intégration à l'intérieur d'un roulement, notamment à l'intérieur d'un roulement de roue de véhicule automobile.

Le dispositif d'étanchéité est monté entre une bague tournante et une bague non tournante d'un roulement afin d'assurer le passage d'un fluide entre lesdites bagues traversées chacune par des canaux de passage de fluide. Le dispositif d'étanchéité comprend un corps central annulaire, présentant un rebord circulaire de fixation sur l'une des bagues du roulement, et deux lèvres principales d'étanchéité qui forment entre elles une chambre intermédiaire annulaire et qui sont en contact de frottement sur l'autre bague du roulement. Le corps central est traversé par au moins un canal qui communique d'une part avec les canaux de la bague associée au rebord circulaire de fixation et d'autre part avec la chambre intermédiaire, laquelle communique avec les canaux de l'autre bague du roulement. Le fluide introduit dans les canaux de l'une des bagues du roulement traverse le corps central via sa chambre intermédiaire et son canal de façon étanche, puis sort par les canaux de l'autre bague du roulement. Selon l'invention, le corps central annulaire est d'une seule pièce en matériau élastique (par exemple caoutchouc, ou élastomère) et inclut les deux lèvres principales d'etanchéité.

Les lèvres principales d'étanchéité du corps central présentent de préférence dans leur zone de frottement un revêtement présentant de meilleures caractéristiques de frottement, d'étanchéité et de coefficient de frottement par rapport au reste des lèvres principales. Le produit connu sous le nom de Téflon est tout à fait satisfaisant à cet égard.

Avantageusement, le corps central annulaire présente également deux lèvres secondaires d'étanchéité pour le produit lubrifiant contenu dans le roulement. Les lèvres secondaires d'étanchéité permettant de protéger les zones de frottement des lèvres principales d'étanchéité contre le produit lubrifiant du roulement.

L'invention sera mieux comprise à l'étude de la description détaillée de quelques modes de réalisation pris à titre nullement limitatif et illustrés par les dessins annexés, sur lesquels :
la figure 1 est une vue partielle en coupe axiale d'un roulement équipé d'un dispositif de liaison étanche selon un premier mode de réalisation de l'invention,
la figure 2 est une vue similaire à la figure 1 représentant un second mode de réalisation de l'invention,
la figure 3 est une vue similaire à la figure 1 représentant un troisième mode de réalisation de l'invention,
la figure 4 est une vue similaire à la figure 1 représentant un quatrième mode de réalisation de l'invention, et
la figure 5 est une vue partielle en coupe axiale de la bague extérieure du roulement selon les figures 3 et 4.

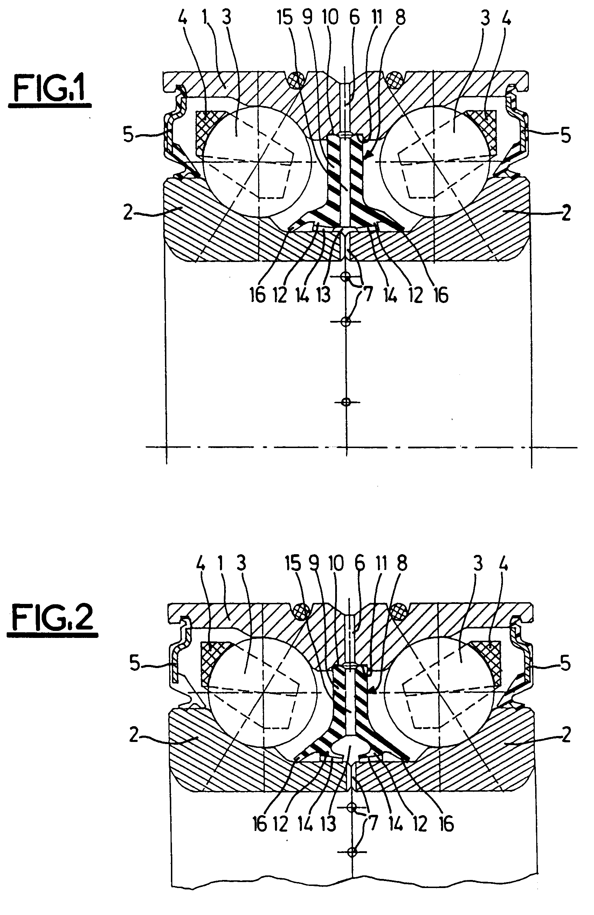

Le roulement illustré sur la figure 1 comprend une bague extérieure 1, une bague intérieure 2 formée par deux demi-bagues accolées axialement, et deux rangées de billes 3 de roulement qui sont espacées circonférentiellement par des cages 4. La bague extérieure 1 et la bague intérieure 2 peuvent être animées d'un mouvement de rotation l'une par rapport à l'autre. La bague extérieure 1 peut être fixe ou tournante.

Le roulement est protégé du milieu extérieur par deux joints d'étanchéité latéraux annulaires 5. Dans un plan radial entre les deux rangées de billes 3 se trouvent plusieurs canaux extérieurs radiaux 6 traversant la bague extérieure 1 du roulement, et plusieurs canaux intérieurs radiaux 7 traversant la bague intérieure 2 du roulement. Dans l'espace annulaire formé par les bagues extérieure 1 et intérieure 2 et les deux rangées de billes 3 est monté un dispositif d'étanchéité 8 permettant le passage d'un fluide entre les canaux extérieurs 6 et intérieurs 7 du roulement.

Le dispositif d'étanchéité 8 comprend un corps central annulaire 9 présentant un rebord circulaire extérieur de fixation 10 encastré dans une rainure annulaire 11 aménagée au voisinage des canaux extérieurs 6 de la bague extérieure 1. Le corps central 9 présente deux lèvres principales intérieures d'étanchéité 12 qui définissent entre elles une chambre intermédiaire annulaire 13 communiquant avec les canaux intérieurs 7. Les zones de frottement 14 des lèvres principales d'étanchéité 12 sont revêtues d'une matière anti-friction telle que du Téflon. Plusieurs canaux radiaux 15 répartis circonférentiellement traversent le corps central 9 en reliant les canaux extérieurs 6 de la bague extérieure 1 et la chambre intermédiaire 13. Ainsi, le passage du fluide (l'air par exemple) entre les canaux extérieurs 6 et intérieurs 7 est assuré de façon étanche grâce à la structure particulièrement compacte du corps central annulaire 9.

Afin de protéger les lèvres principales d'étanchéité 12, le corps central 9 comporte deux lèvres externes secondaires d'étanchéité 16 en contact de frottement sur la bague intérieure 2, ces lèvres d'étanchéité secondaires 16 empêchent la graisse de lubrification des billes d'entrer dans les zones de frottement 14 des lèvre principales 12.

Le mode illustré sur la figure 2 diffère de celui décrit précédemment qu'en ce qui concerne le corps principal 9 du dispositif de liaison étanche 8. Les lèvres principales d'étanchéité 12 sont ici plus flexibles et la chambre intermédiaire annulaire 13 présente une section plus grande que le mode précédemment décrit.

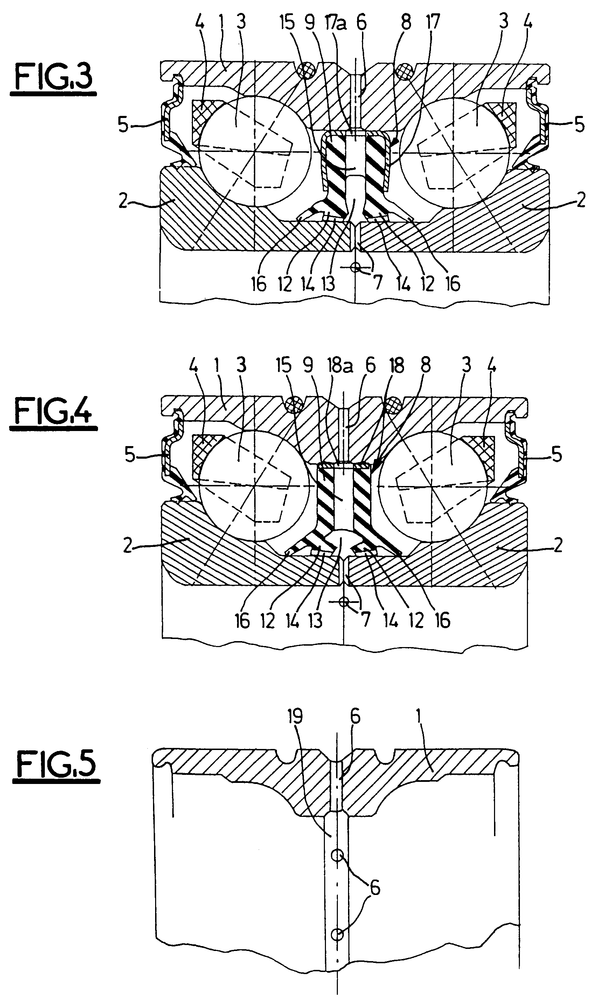

Sur la figure 3 est illustré un autre mode de réalisation de l'invention avec le dispositif d'étanchéité 8 comportant en plus du corps central annulaire 9 une armature métallique annulaire 17 en section en U permettant l'emmanchement axial à force du dispositif 8 sur une portée cylindrique lisse de la bague extérieure 1. Une telle structure peut être utilisée par exemple dans des applications avec passage de fluide sous une pression relativement élevée, l'armature métallique 17 participant alors à la rigidification du corps central 9. Il va de soi que l'armature métallique 17 présente des perforations 17a en regard des canaux radiaux 15 du corps central 9 afin de permettre le passage de fluide. Dans ce mode de réalisation, la chambre intermédiaire annulaire 13 présente une dimension radiale encore plus importante par rapport aux deux modes précédemment décrits.

Dans le mode illustré sur la figure 4, le corps central 9 est surmoulé sur un insert métallique tubulaire 18 permettant l'emmanchement axial du dispositif d'étanchéité 8 dans une portée cylindrique lisse de la bague extérieure 1 du roulement. L'insert métallique 18 présente des perforations 18a pour établir la communication entre les canaux extérieurs 6 de la bague extérieure 1 et les canaux internes 15 du corps central 9 du dispositif d'étanchéité 8.

Les dispositifs d'étanchéité 8 présentent une structure symétrique par rapport à un plan radial passant par les canaux radiaux extérieurs 6 et intérieurs 7.

Les lèvres principales 12 d'étanchéité au fluide dans les modes illustré sur les figures 1 et 3 sont mises en pression sur leur portée de frottement correspondante 14 grâce à un montage du dispositif 8 entre les bagues extérieure 1 et intérieure 2 du roulement avec précontrainte radiale. Dans le cas des figures 2 et 4 les lèvres principales 12 d'étanchéité au fluide sont mises en pression sur leur portée de frottement correspondante 14 en partie grâce à un montage du dispositif 8 entre les bagues extérieure 1 et intérieure 2 de roulement avec précontrainte radiale, mais aussi grâce à l'action de la pression du fluide sur la partie interne des lèvres principales 12 d'étanchéité qui sont recourbées en se rapprochant.

Les dispositifs d'étanchéité 8 ne peuvent en aucun cas subir de déplacements axiaux intempestifs sous l'effet de la pression du fluide le traversant comme cela peut être le cas pour une étanchéité avec deux joints séparés, car la pression du fluide s'exerce à l'intérieur du corps central 9 et les efforts axiaux internes qui en découlent s'équilibrent.

De façon avantageuse, la bague extérieure 1 de roulement servant à la fixation du dispositif d'étanchéité 8 présente une gorge circulaire 19 (figure 5) reliant les canaux extérieurs radiaux 6 pour permettre au fluide de transiter entre les canaux extérieurs radiaux 6 et les canaux radiaux internes 15 du corps central 9 du dispositif 8, sans qu'il soit nécessaire d'indexer angulairement le dispositif 8 par rapport à la bague extérieure 1 lors de l'opération de montage. Cette gorge annulaire 19 est déjà présente dans les figures 1 à 4 précitées.

## Revendications

1. Dispositif d'étanchéité (8) pour le passage d'un fluide entre une bague tournante et une bague non tournante d'un roulement traversées chacune par des canaux (6,7) de passage du fluide, comprenant un corps central annulaire (9) présentant un rebord circulaire (10) de fixation sur l'une des bagues tournante ou non tournante (1), et deux lèvres principales (12) d'étanchéité qui forment entre elles une chambre intermédiaire annulaire (13) et qui sont en contact de frottement sur l'autre bague (2), le corps central (9) étant traversé par au moins un canal (15) qui communique d'une part avec les canaux (6) de la bague (1) associée au rebord circulaire de fixation et d'autre part avec la chambre intermédiaire, laquelle communique avec les canaux (7) de l'autre bague, de façon à ce que le fluide introduit dans les canaux de l'une des bagues du roulement traverse le corps central et la chambre intermédiaire annulaire de façon étanche et sorte par les canaux de l'autre bague caractérisé en ce que le corps central annulaire (9) est d'une seule pièce en matériau élastique et inclut les deux lèvres principales d'étanchéité (12).

2. Dispositif selon la revendication 1, caractérisé en ce que les lèvres principales d'étanchéité (12) comportent dans leur zone de frottement (14) un revêtement présentant de meilleures caractéristiques de frottement, d'étanchéité et de coefficient de frottement par rapport au reste des lèvres principales (12).

3. Dispositif selon la revendication 1 ou 2, caractérisé en ce que le corps central (9) comprend deux lèvres secondaires d'étanchéité (16) en contact de frottement avec la bague (2) associée aux lèvres principales d'étanchéité pour empêcher le produit lubrifiant contenu dans le roulement d'entrer en contact avec les zones de frottement (14) des lèvres principales d'étanchéité (12).

4. Dispositif selon l'une des revendications précédentes, caractérisé en ce que le corps central annulaire (9) est symétrique par rapport à un plan radial, les canaux (6, 7 et 15) des bagues du roulement et du corps central se trouvant dans le plan de symétrie.

5. Dispositif selon la revendication 4, caractérisé en ce qu'il comprend une armature métallique annulaire (17) à section en U permettant l'emmanchement axial à force du corps central (9) sur une portée cylindrique de la bague (1) recevant le rebord circulaire (10) de fixation du corps central, et la rigidification du corps central.

6. Dispositif selon la revendication 4, caractérisé en ce qu'il comprend un insert métallique tubulaire (18) sur lequel est surmoulé le corps central (9), l'insert métallique permettant l'emmanchement axial du corps central sur une portée cylindrique de la bague (1) associée au rebord circulaire (10) de fixation du corps central.

7. Dispositif selon l'une quelconque des revendications précédentes, caractérisé en ce que les lèvres principales (12) sont recourbées en se rapprochant de façon à ce que la partie interne desdites lèvres principales soit mise en pression sur leur portée de frottement en partie par l'action de la pression.

8. Roulement comprenant une bague extérieure (1), une bague intérieure (2) traversées toutes deux par des canaux (6, 7) de passage d'un fluide, caractérisé en ce qu'il est équipé d'un dispositif d'étanchéité (8) selon l'une des revendications précédentes pour assurer le passage du fluide entre les canaux aménagés dans les bagues.

9. Roulement selon la revendication 7, caractérisé en ce que dans la bague (1) associée au montage du dispositif d'étanchéité (8) est aménagée une gorge annulaire (19) dans laquelle débouchent les canaux (6) de ladite bague et au moins un canal (15) du corps central (9) du dispositif.

10. Roulement selon la revendication 7 ou 8, caractérisé en ce que la bague extérieure (1) présente une rainure annulaire (11) pour le montage du rebord de fixation (10) du corps central (9) du dispositif.

## Claims

1. A sealing device (8) for the passage of the fluid between a rotating race and a non-rotating race of a bearing, each penetrated by channels (6,7) for the passage of the fluid, comprising an annular central body (9) havinga circular shoulder (10) for fixing to one of the rotating or non-rotating races (1), and two main sealing lips (12) which mutually form an annular intermediate chamber (13), and which are in friction contact with the other race (2), the central body (9) being penetrated by at least one channel (15) which communicates with the channels (6) of the race 1 associated with the circular fixing shoulder , and also with the intermediate chamber , which communicates with the channels (7) of the other race, so that the fluid introduced into the channels of one of the races of the bearing passes through the central body and the annular intermediate chamber in a leaktight manner and exits through the channels of the other race, characterized in that the annular central body (9) is made in one-piece of elastic material and includes the two main sealing lips (12)

2. The device of claim 1 , characterized in that the main sealing lips (12) comprise in their friction zone (14) a coating which has better friction , tightness and friction coefficient features than the rest of the main lips (12).

3. The device of claim 1 or 2 , characterized in that the central body (9) comprises two secondary sealing lips (16) in friction contact with the race (2) associated with the main sealing lips to prevent the lubricant contained in the bearing from entering into contact with the friction zones (14) of the main sealing lips (12).

4. The device of any one of the preceding claims, characterized in that the annular central body (9) is symmetrical about a radial plane, the channels (6,7 and 15) of the races of the bearing and of the central body lying in the plane of symmetry.

5. The device of claim 4, characterized in that a U-section annular metallic reinforcement (17) allowing the axial force fit on the central body (9) on a cylindrical surface of the race (1) receiving the circular shoulder (10) for fixing on the central body, and the rigidification of the central body.

6. The device of claim 4, characteried in that it comprises a tubular metallic insert (18) on which the central body (9) is duplicate molded, the metallic insert allowing the axial fit of the central body on a cylindrical surface of the race (1) associated with the circular shoulder (10) for fixing the central body.

7. The device of any of the preceding claims, characterized in that the main lips (12) are curved as they come together, so that the internal portion of said main lips is pressurized on their friction surface partly by the action of the pressure.

8. A bearing comprising an outer race (1), an inner race (2) both penetrated by channels (6,7) for the passage of a fluid, characterized in that it is equipped with a sealing device (8) according to one of the preceding claims, to allow the passage of the fluid between the channels arranged in the races.

9. The bearing of claim 7,characterized in that, in the race (1) associated with the assembly of the sealing device (8), an annular groove (19) is arranged, into which the channels (6)of said race and at least one channel (15) of the central body (9) of the device terminate.

10. The bearing of claims 7 or 8, characterized in that the outer race (1) has an annular slot (11) for the assembly of the fixing shoulder (10) of the central body (9) of the device.

## Patentansprüche

1. Dichtungsanordnung (8) zur Fluidübertragung zwischen einem umlaufenden Ring und einem stillstehenden Ring eines Wälzlagers, die beide von Kanälen (6,7) zur Fluidübertragung durchquert werden,
mit einem ringförmigen Mittelkörper 9, der einen kreisförmigen Rand (10) zur Befestigung an entweder dem drehenden oder dem stillstehenden Ring (1) und zwei Hauptdichtlippen (12) aufweist, die zwischen sich einen ringförmigen Zwischenraum (13) begrenzen und die mit dem anderen Ring (2) in Reibkontakt stehen, wobei der Mittelkörper (9) von wenigstens einem Kanal (15) durchquert wird, der einerseits mit den Kanälen (6) des dem kreisförmigen Befestigungsrand zugeordneten Rings (1) und andererseits mit der Zwischenraum in Verbindung steht, der mit den Kanälen (7) des anderen Rings strömungsmäßig in der Weise in Verbindung steht, dass das Fluid, das in die Kanäle des einen der Ringe des Lagers eingespeist wird, den Mittelkörper und den ringförmigen Zwischenraum in abgedichteter Weise durchquert und durch die Kanäle des anderen Rings austritt, dadurch gekennzeichnet, dass der ringförmige Mittelkörper (9) einstückig aus einem elastischen Material besteht.

2. Anordnung nach Anspruch 1, dadurch gekennzeichnet, dass die Hauptdichtlippen (12) in ihrer Reibzone (14) eine Beschichtung tragen, die verbesserte Eigenschaften hinsichtlich der Reibung, der Abdichtung und des Reibkoeffizienten, bezogen auf den übrigen Teil der Hauptlippen (12) zeigt.

3. Anordnung nach den Ansprüchen 1 oder 2, dadurch gekennzeichnet, dass der Mittelkörper (9) zwei sekundäre Dichtlippen (16) aufweist, der den Hauptdichtlippen zugeordnet ist, um zu verhindern, dass das Schmiermittel, das in dem Lager enthalten ist, mit den Reibzonen (14) der Hauptdichtlippen (12) in Berührung kommt.

4. Anordnung nach einem der vorhergehenden Ansprüche, dadurch gekennzeichnet, dass der ringförmige Mittelkörper (9) bezüglich einer Radialebene symmetrisch ist und dass die Kanäle (6, 7 und 15) der Lagerringe sowie des Mittelkörpers sich in der Symmetrieebene befinden.

5. Anordnung nach Anspruch 4, dadurch gekennzeichnet, dass sie einen metallischen Verstärkungsring (17) mit U-förmigem Querschnitt aufweist, der eine Press-Sitz-Verbindung des Mittelkörpers (9) mit einem zylindrischen Sitz desjenigen Rings (1) gestattet, der den ringförmigen Befestigungsrand (10) des Zentralkörpers aufnimmt, sowie die Versteifung des Zentralkörpers ermöglicht.

6. Anordnung nach Anspruch 4, dadurch gekennzeichnet, dass sie einen rohrförmigen Metelleinsatz (18) aufweist, auf dem der Mittelkörper (9) aufgespritzt ist, wobei der Metalleinsatz eine Press-Sitzverbindung des Mittelkörpers mit einer zylindrischen Sitzfläche desjenigen Rings (1) ermöglicht, der dem kreisförmigen Befestigungsrand (10) des Mittelkörpers (9) zugeordnet ist.

7. Anordnung nach einem der vorhergehenden Ansprüche, dadurch gekennzeichnet, dass die Hauptlippen (12) in der Weise aufeinander zu gekrümmt sind, dass der innere Bereich der Hauptlippen zum Teil durch die Wirkung des Drucks auf ihre Reibflächen unter Druck gesetzt sind.

8. Lager mit einem Außenring (1), einem Innenring (2), die beide von Kanälen (6, 7) für den Durchtritt eines Fluids durchquert sind, dadurch gekennzeichnet, dass es mit einer Dichtungsanordnung (8) nach einem der vorhergeheneden Ansprüche ausgerüstet ist, um die Fluidübertragung zwischen den Kanälen zu gewährleisten, die in den Ringen vorgesehen sind.

9. Lager nach Anspruch 7, dadurch gekennzeichnet, dass der Ring (1), der für die Halterung der Dichtungsanordnung (8) vorgesehen ist, mit einer Ringnut (19) versehen ist, in die die Kanäle (6) des Rings und wenigstens ein Kanal (15) des Mittelkörper (9) der Anordnung münden.

10. Lager nach Anspruch 7 oder 8, dadurch gekennzeichnet, dass der Außenring (1) eine Ringnut (11) aufweist zur Halterung des Befestigungsrandes (10) des Mittelkörpers (9) der Anordnung.
